# EUROPEAN PATENT APPLICATION

(11) **EP 1 039 724 A2**
(43) Date of publication of application: **27.09.2000**
(21) Application number: 99308625.5
(22) Date of filing: 29.10.1999
(51) Int. Cl.: H04L 29/06, H04L 12/12

(54) **Method and apparatus providing for internet protocol address authentication**

(30) Priority: 29.10.1998 US 182944; 19.05.1999 US 314601
(71) Applicant: Nortel Networks Limited, Montreal, Quebec H2Y 3Y4 (CA)
(72) Inventor: Borsato, Larry, Ottawa, Ontario K1V 9C8 (CA); Hamilton, Ian K., Nepean, Ontario K2G 6C8 (CA); Waters, Glenn, Stittsville, Ontario K2S 1B8 (CA); Gaudet, Mark W., Ottawa, Ontario J1Y 0S9 (CA); Anderson, Rodrick, Carp, Ontario K0A 1L0 (CA)
(74) Representative: Ryan, John Peter William

(57) **Abstract**

A method and apparatus for storage of user identifier / IP address pairs in a network. The network includes a DHCP server for assigning IP addresses to computer and other devices in the network, a device (such as a computer) coupled to receive an IP address from the DHCP server, an authentication server coupled with the device for receiving user identifier / IP address pairs from the device and authenticating the user, and a directory server coupled to receive authenticated user identifier / IF address pairs from the authentication server.

## Description

### BACKGROUND OF THE INVENTION

An IP address (also called an IP number) is a number (typically written as four numbers separated by periods, i.e. 107.4.1.3 or 84.2.1.111) which uniquely identifies a computer that is making use of the Internet. It is analogous to your telephone number in that the telephone network directs calls to your telephone using your telephone number. The IP address is used by the Internet to direct data to your computer, e.g. the data your web browser retrieves and displays when you surf the net.

It is important that each computer accessing the internet (or an intranet) has a unique IP address. One method of doing this is for a network administrator to individually assign an IP address to each computer that will make use of the network. This is a relatively cumbersome task especially in networks supporting a large number of computers. The task is complicated by the fact that if computers move to another location in another part of the network, a new IP address must be entered.

Dynamic Host Configuration Protocol (DHCP) is a protocol that lets network administrators manage centrally and automate the assignment of IP addresses in an organization's network. DHCP essentially lets a network administrator supervise and distribute IP addresses from a central point and automatically sends a new IP address when a computer is plugged into a different place in the network. The DHCP server grants the computer a period of time to use the IP address. This period of time is called the DHCP lease period. (It should be noted that this application has referred to computers but any number of other devices could be connected to a network and be assigned IP addresses--such devices might be referred to generically simply as devices and, when receiving an IP address from a DHCP server, as DHCP clients.)

Of course, from the standpoint of network management, this eases the burden on the network administrator significantly. Unfortunately, there is no longer a one-to-one association between particular computers and IP addresses.

DHCP does provide an authentication mechanism essentially by denying a user an IP address until the user has been authenticated. Thus, only users authorized to receive an IP address from the particular DHCP server will receive one. In essence, the user is authenticated. However, no mechanism is provided to applications to look up user identifiers based on known IP addresses or to look up IP addresses based on known user identifiers.

With the advent of certain technologies, such as Voice over IP and policy enabled networking, it would be useful to provide a trusted association between IP addresses and particular computers (and, even particular users). In these applications, routing and bandwidth considerations are based on source and destination addresses. These decisions require authenticated addresses; therefore, DHCP authentication of users is not an effective way to decide which users will get access to network services.

Thus, what is desired is an improved method and apparatus for authenticating computers/user and IP address pairs.

Directories of network users exist. For example, email systems typically include their own directories. The CCITT has adopted X.500 as a standard for directories on networks using TCP/IP networks. X.500 has been criticized as being too large. More recently, the Lightweight Directory Access Protocol (LDAP) has been proposed. The original specifications for LDAP were set forth in RFC 1487. More recently, LDAPv2 was defined in RFC 1777 and even more recently LDAPv3 has been defined in RFC 1487.

These directories include much information about network users. RFC 2256 provides a list of attributes to be stored in a standard LDAPv3 database. The LDAPv3 database schema includes, for example, business names, post office addresses, telephone information, etc. However, the included information is relatively static information.

What is needed is to include dynamic information in a LDAP directory including, by way of example, IP address information.

### Summary of the Invention

According to a first aspect of the invention there is provided a method and apparatus for authenticating user/internet protocol (IP) address pairs comprising binding a user identifier with an assigned internet protocol address. The bound user/IP address is stored for retrieval by applications desiring to authenticate users based on their IP address.

According to a fourth aspect of the invention there is provided a method comprising : providing an internet protocol (IP) address to a computer; establishing a connection between the computer and a server; receiving by the server the IP address and a corresponding user identifier and to be used by a user of the computer; and storing the user identifier/IP address pair in a data store.

According to another aspect of the invention there is provided a server comprising: a first data store having stored therein an authenticated user identifier/internet protocol address pair; and a second data store having stored therein a program which when executed on a processor retrieves the authenticated user identifier/internet protocol address pair and transmits the pair to a requesting device.

According to another aspect of the invention there is provided a network comprising a DHCP server for assigning internet protocol (IP) addresses to computer and other devices in the network, a device coupled to receive an IP address from the DHCP server, an authentication server coupled with the device for receiving user identifier/IP address pairs from the device and authenticating the user, and a directory server coupled to receive authenticated user identifier/IP address pairs from the authentication server.

According to another aspect of the invention there is provided a lightweight directory access protocol (LDAP) server comprising: a first data store having stored therein a user identifier/internet protocol address pair; and a second data store having stored therein a program which when executed on processor retrieves the user identifier/internet protocol address pair and transmits the pair to a requesting device.

### BRIEF DESCRIPTION OF THE DRAWINGS

**Figure 1** is an overall diagram illustrating a network as may implement an embodiment of the described invention.

**Figure 2** is a overall flow diagram illustrating a method of an embodiment of the present invention.

**Figure 3** is a high level block diagram of a Lightweight Directory Access Protocol server as may be utilized in embodiments of the present invention.

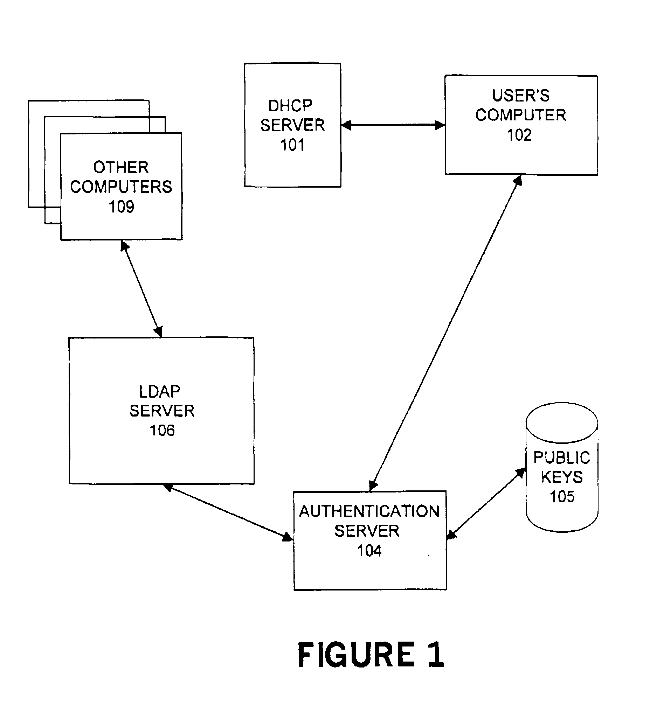

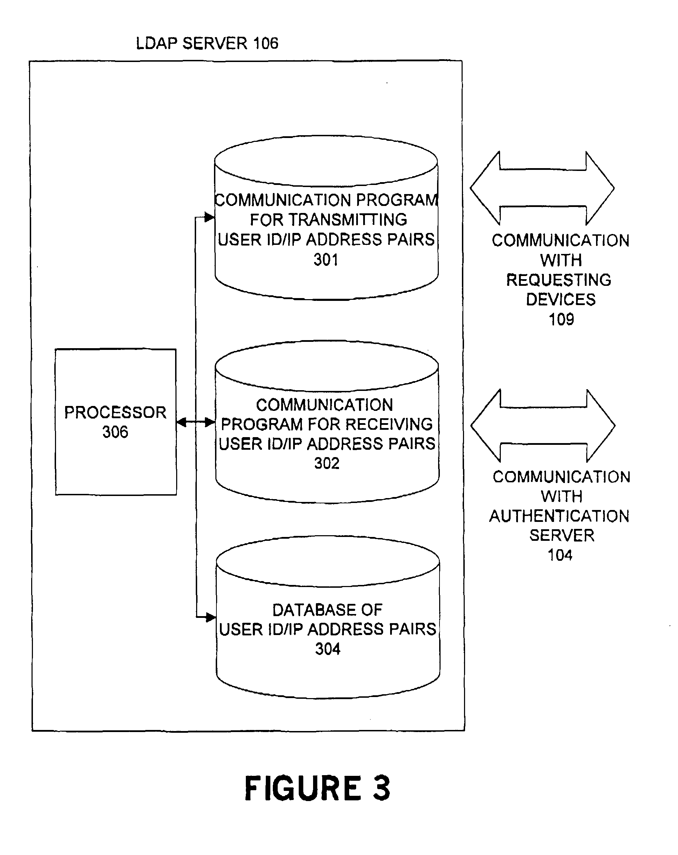

For ease of reference, it might be pointed out that reference numerals in all of the accompanying drawings typically are in the form "drawing number" followed by two digits, xx; for example, reference numerals on **Figure 1** may be numbered 1xx; on **Figure 3**, reference numerals may be numbered 3xx. In certain cases, a reference numeral may be introduced on one drawing and the same reference numeral may be utilized on other drawings to refer to the same item.

### DETAILED DESCRIPTION OF

### THE EMBODIMENTS OF THE PRESENT INVENTION

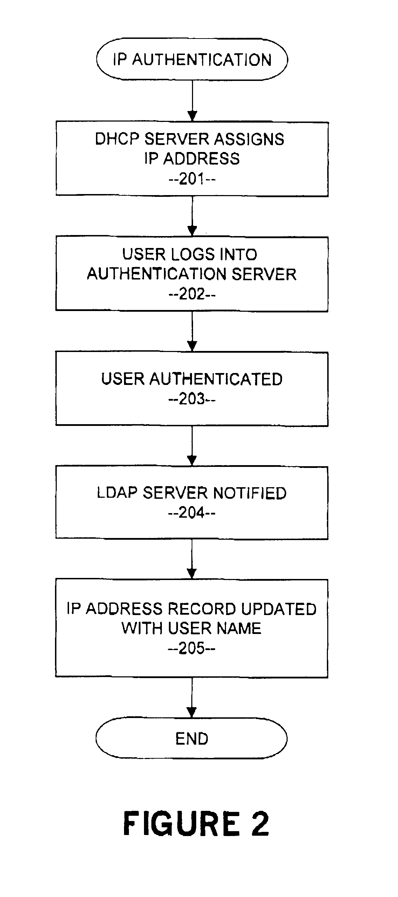

Turning first to **Figure 1**, an overall diagram illustrating a network as may implement an embodiment of the present invention is provided. It will be worthwhile to describe **Figure 1** in conjunction with **Figure 2** which illustrates a method of an embodiment of the invention. In **Figure 1**, a user's computer **102** is illustrated. The user's computer **102** initiates a DHCP request to DHCP server **101** to obtain an IP address. The DHCP server **101** assigns an IP address to the user's computer **102**, block **201**. This processing follows standard DHCP processing and will be not be described in greater detail except to note that this processing may be carried out using authenticated DHCP processing as was mentioned above in the background section. It should also be noted that, in the described embodiment, the user receives an IP address via DHCP. However, in alternate embodiments, the IP address may be received by alternative means (such as by being directly assigned by a network administrator) without departure from the spirit and scope of the present invention. What is important is that there exists a user/IP address pair to be stored.

It should be noted that, particularly when assigned by a DHCP server, the IP address is relatively dynamic. The present invention may have application with respect to storage of other dynamic information and binding the dynamic information with a user identifier by storing in the information in a LDAP or other database.

It should also be noted that the various connections illustrated on **Figure 1**, including for example the connection between the user's computer **102** and the DHCP server **101**, may be direct connections as illustrated. More commonly, these connections will be made through a network such as the internet using TCP/IP as the transport protocol.

The user then logs into an authentication server **104**, block **202**. This log-in process may utilize some simple identification of the user (such as by the user simply providing a log-in user identifier) or may use any level of more sophisticated security ranging from simple password security to use of secure encryption for the session.

In one embodiment, the user logs into the authentication server **104** using a web page which allows the user to provide both a user identifier ("user id") and a password. Messages sent to the authentication sever **104** will include the user identifier, password and the IP address assigned to the user's computer **102**. In an alternative embodiment, the user may store on the computer **102** both a user identifier and password. The computer **102** may be programmed to automatically provide the stored user identifier, password and IP address to the authentication server **104**. This programming may be accomplished, for example, by downloading a JAVA™ Applet. Of course, storing the user's password directly on the computer **102** provides security implications. Therefore, in alternative embodiments, the user may provide this information at initial log-in to the computer **102** (as is common in many computer environments) rather than storing it permanently on the computer **102**.

The authentication server **104** authenticates the user as an authorized user, block **203**. This process may include retrieving the user's public key from a public key database **105** if the session is an encrypted session.

After the user is authenticated, block **203**, the authentication server **104** notifies a Lightweight Directory Access Protocol (LDAP) server **106**, block **204**. The LDAP server **106** stores the user identifier/IP address pair, block **205**. The session between the authentication server **104** and the LDAP server **106** may be authenticated in order to provide for security of this transaction. Alternatively, both processes may execute on the same hardware platform in certain embodiments.

The information in the LDAP server may then be used by various applications executing on computers **109** which require authenticated user id/IP address information.

As will be appreciated, the authentication of the user id and IP address pair known to be valid only at the instant of authentication. In certain embodiments, it may be useful to provide for a time out or other mechanism which requires the user to re-authenticate after some event (such as the expiration of a period of time).

Turning briefly to **Figure 3**, a high level block diagram illustrating components of the LDAP server **106** is shown. The LDAP server **106** comprises a database of authenticated user id/IP address pairs **304**. These pairs have, in the described embodiment, been received from the authentication server **104** using a communication program **302** executed on processor **306** for receiving the user id/IP address pairs. Applications executing on requesting devices **109** may request access to the user id/IP address pairs **304** by using communication program **301**.

Certain implementations may not require security. In such implementations, aspects of the present invention may be implemented without requirement for use of the authentication techniques discussed above. Therefore, the present application may refer to the authentication server **104** simply as a binding server. The binding server and LDAP server (or other database) may be referred to collectively as a "binding system" which serves to associate a user identifier with dynamic information about the user (such as an IP address) and store the information in a data store.

Thus, what has been disclosed is a method and apparatus for authenticating users/internet protocol (IP) address pairs.

## Claims

1. A method comprising:
providing an internet protocol (IP) address to a computer;
establishing a connection between the computer and a server;
receiving by the server the IP address and a corresponding user identifier and to be used by a user of the computer; and
storing the user identifier/IP address pair in a data store.

2. The method as recited by claim 1, wherein the establishing of the connection includes
authenticating the user; and
establishing a secure connection between the computer and the server if the user is authenticated.

3. The method as recited by claim 1, wherein the assigning of the internet protocol address includes
initiating a request by the computer to a dynamic host configuration protocol (DHCP) server; and
assigning the IP address by the DHCP server; and
sending the IP address to the computer.

4. The method as recited by claim 1, wherein the data store includes a database of a Lightweight Directory Access Protocol server.

5. A server comprising:
a first data store having stored therein an authenticated user identifier / internet protocol address pair; and
a second data store having stored therein a program which when executed on a processor retrieves the authenticated user identifier / internet protocol address pair and transmits the pair to a requesting device.

6. The server as recited by claim 5, further comprising:
a third data store having stored therein a program which when executed on a processor stores authenticated user identifier / internet protocol address pairs received from an authentication server.

7. A method comprising:
a first device communicating with a dynamic host configuration protocol (DHCP) server to have an internet protocol (IP) address assigned to the first device;
the first device communicating with an authentication server a user identifier and the IP address;
the authentication server authenticating the user;
the authentication server communicating to a lightweight directory access protocol (LDAP) server the user identifier / IP address pair; and
the LDAP server storing the user identifier / IP address pair.

8. A network comprising:
a dynamic host configuration protocol (DHCP) server;
a computer coupled in communication with the DHCP server over the network to receive an internet protocol (IP) address;
an authentication server coupled in communication over the network with the computer, the authentication server to authenticate a user using the computer based on a user identifier communicated from the computer; and
a directory server coupled in communication with the authentication server, the directory server to receive and store both the authenticated user identifier and its corresponding IP address from the authentication server.

9. The network as recited by claim 8, wherein the directory server is a lightweight directory access protocol (LDAP) server.

10. The network as recited by claim 8 further comprising requesting devices coupled in communication with the directory server for requesting authenticated user identifier / IP address pairs.

11. A network comprising a DHCP server for assigning internet protocol (IP) addresses to computer and other devices in the network, a device coupled to receive an IP address from the DHCP server, an authentication server coupled with the device for receiving user identifier / IP address pairs from the device and authenticating the user, and a directory server coupled to receive authenticated user identifier / IP address pairs from the authentication server.

12. A lightweight directory access protocol (LDAP) server comprising:
a first data store having stored therein an user identifier / internet protocol address pair; and
a second data store having stored therein a program which when executed on processor retrieves the user identifier / internet protocol address pair and transmits the pair to a requesting device.

13. A lightweight directory access protocol (LDAP) server comprising:
a first data store having stored therein an user identifier and dynamic information related to the user identifier; and
a second data store having stored therein a program which when executed on processor retrieves the user identifier and dynamic information and transmits the information to a requesting device.

14. The LDAP server as recited by claim 13, further comprising a third data store having stored therein a program which when executed on a processor stores dynamic information related to a user identifier in the first data store.

15. The LDAP server as recited by claim 14, wherein the dynamic information is an internet protocol address.
